# EUROPÄISCHE PATENTSCHRIFT

(11) **EP 0 538 671 B1**
(45) Veröffentlichungstag und Bekanntmachung des Hinweises auf die Patenterteilung: **10.01.1996**
(21) Anmeldenummer: 92117077.5
(22) Anmeldetag: 07.10.1992
(51) Int. Cl.: F41G 7/22, G01S 3/786, G02B 27/64, G02B 17/08

(54) **Suchkopf, insbesondere für zielsuchende Flugkörper**
Seeker, mainly for missile guidance
Autodirecteur, en particulier pour le guidage des missiles

(30) Priorität: 25.10.1991 DE 4135260
(43) Veröffentlichungstag der Anmeldung: 28.04.1993
(73) Patentinhaber: Bodenseewerk Gerätetechnik GmbH, D-88641 Überlingen (DE)
(72) Erfinder: Kordulla, Hans, W-7776 Owingen (DE)
(74) Vertreter: Weisse, Jürgen, Dipl.-Phys. Patentanwalt

(56) Entgegenhaltungen:
- EP-A- 0 099 769
- DE-B- 2 454 480
- DE-B- 2 637 735
- FR-A- 2 485 787
- US-A- 4 085 910

## Beschreibung

Die Erfindung betrifft einen Suchkopf, insbesondere für zielsuchende Flugkörper, mit einem kardanisch über einen Innen- und einen Aussenrahmen gegenüber einer Struktur allseitig beweglich gelagerten abbildenden optischen System und einem Detektor, auf welchem durch das optische System ein Bild eines Gesichtsfeldes erzeugbar ist, bei welchem
(a) das abbildende optische System ein auf dem Innenrahmen angeordnetes, objektseitiges optisches Glied aufweist, das eine optische Achse des abbildenden optischen Systems definiert,
(b) das optische System einen auf dem Innenrahmen angeordneten Umlenkspiegel enthält, durch welchen der Strahlengang gefaltet wird und
(c) Spiegelmittel vorgesehen sind, welche den Strahlengang umkehren.

Bei einem bekannten Suchkopf sind ein Infrarot-Empfangssystem zusammen mit einem Drehgeschwindigkeitssensor und der zugehörigen Steuer- und Verstärkungselektronik in einem Gehäuse starr miteinander verbunden. Das Infrarot-Empfangssystem besteht dabei aus einem gasgekühlten Mehrelementdetektor, einem abbildenden optischen System in Form eines gefalteten Linsenobjektivs und einer Abtasteinrichtung zum Abtasten eines von dem Sucher erfassten Gesichtsfeldes. Das abbildende optische System bildet das Gesichtsfeld in der Ebene des Detektors ab. Die Abtasteinrichtung bewirkt eine Bewegung des Gesichtsfeldbildes relativ zu dem Detektor, so dass der Mehrelementdetektor das Gesichtsfeld abtastet.

Das erwähnte Gehäuse bildet einen um Nick- und Gierachse drehbaren Rahmen eines Rahmensystems. Der Suchkopf kann sich daher relativ zu der Struktur, z.B. der Zelle eines Flugkörpers, in einem begrenzten Winkelbereich verdrehen und auf ein Ziel ausrichten. Die elektrischen Leitungen des Mehrelementdetektors sowie die Hochdruck-Gaszuleitungen müssen dabei in dem Winkelbereich flexibel über die beiden Rahmenachsen (Nick- und Gierachse) geführt werden. Eine solche Anordnung ist aufwendig. Der Suchkopf wird unerwünscht gross und schwer. Ausserdem ergeben sich hohe Rahmenträgheitsmomente.

Es sind weiterhin Suchköpfe bekannt, bei denen das abbildende System auf einem um zwei Achsen beweglich gelagerten Rahmen angeordnet ist, während der Infrarot-Detektor strukturfest angeordnet ist. Durch zusätzliche optische Elemente (Linsen und Spiegel) und Zwischenabbildungen werden die gebündelten Infrarotstrahlen durch die Rahmenachsen geführt. Dadurch wird ein Infrarotbild in der strukturfesten Ebene des Infrarot-Detektors erzeugt. Das erfordert ein sehr aufwendiges optisches System. Ausserdem treten dabei gerade im Infrarotbereich zusätzlich Transmissions- und Streuverluste an den optischen Elementen auf. Weiterhin ergeben sich Einbussen in der Bildauflösung.

Die DE-B-24 54 480 zeigt einen Suchkopf, bei dem ein Aussenrahmen um die Längsachse des Flugkörpers drehbar angeordnet ist. Ein Innenrahmen ist um eine zu der Rahmenachse des Aussenrahmens senkrechte Achse gegenüber dem Aussenrahmen drehbar. Der Innenrahmen trägt ein Objektiv, das eine optische Achse bestimmt, einen Umlenkspiegel und einen bilddrehenden Dachkantspiegel. Dabei verläuft der Strahlengang von dem Objektiv auf den Dachkantspiegel und von diesem auf den Umlenkspiegel. Der Umlenkspiegel ist durch ein Getriebe um die Rahmenachse des Innenrahmens verschwenkbar. Die Verschwenkung erfolgt um den halben Schwenkwinkel des Innenrahmens. Dadurch wird der Strahlengang stets in ein aussenrahmenfestes optisches System geleitet, welches das Lichtbündel zu einem Detektor führt.

Die DE-A-26 37 735 zeigt einen Suchkopf mit einer Abtastvorrichtung, bei welcher ein Gesichtsfeld von einem Detektor mittels eines umlaufenden Facettenspiegels abgetastet wird. Der Suchkopf weist einen Aussen- und einen Innenrahmen auf. Am Innenrahmen ist ein stabilisierender Kreiselrotor gelagert, der einen ringförmigen Facettenspiegel trägt. Auf dem Innenrahmen sitzt ein Objektiv, das eine optische Achse definiert. Ein am Innenrahmen sitzender Umlenkspiegel lenkt den Strahlengang schräg zur Seite auf den Facettenspiegel, von dem das abbildende Lichtbündel über weitere optische Glieder auf den innenrahmenfesten Detektor geleitet wird.

Der Erfindung liegt die Aufgabe zugrunde, einen einfachen, kleinen und leichten Sucher der eingangs genannten Art zu schaffen, bei welchem Lichtverluste und Einbussen an Bildauflösung, wie sie nach dem Stand der Technik auftreten, vermieden werden.

Erfindungsgemäss wird diese Aufgabe bei einem Suchkopf der eingangs genannten Art dadurch gelöst, dass
(d) der Umlenkspiegel auf dem Innenrahmen feststehend und objektseitig von den Spiegelmitteln so angeordnet ist, dass die umgelenkte optische Achse mit der Rahmenachse des Innenrahmens zusammenfällt,
(e) der Detektor im Aussenrahmen auf den Rahmenachse des Innenrahmens gehaltert ist und
(f) die Spiegelmittel ebenfalls auf der Rahmenachse des Innenrahmens angeordnet sind und die von dem Umlenkspiegel in die Richtung der Rahmenachse des Innenrahmens umgelenkten Strahlengang umkehren und auf den Detektor lenken.

Bei einer solchen Anordnung wird die Optik sehr einfach. Der Innenrahmen trägt nur das abbildende optische System und den Umlenkspiegel. Der Detektor sitzt an dem Aussenrahmen. Es brauchen also keine Leitungen von dem Aussenrahmen auf den Innenrahmen geführt zu werden.

Der Detektor kann ein zweidimensionaler Mehrelementdetektor sein. In diesem Fall können die Spiegelmittel von einem einfachen Planspiegel gebildet sein. Vorteilhafterweise ist jedoch der Detektor ein Reihendetektor. Die Spiegelmittel sind dann von bilddrehenden Mitteln gebildet, die um die Rahmenachse des Innenrahmens antreibbar sind.

Die Spiegelmittel sind vorteilhafterweise auf dem Aussenrahmen angeordnet. Das macht es leichter, die Spiegelmittel z.B. als bilddrehende Mittel anzutreiben.

Ausgestaltungen der Erfindung sind Gegenstand der Unteransprüche 4 bis 14.

Ein Ausführungsbeispiel der Erfindung ist nachstehend unter Bezugnahme auf die zugehörige Zeichnung näher erläutert, die einen Schnitt durch einen Infrarot-Sucher zeigt.

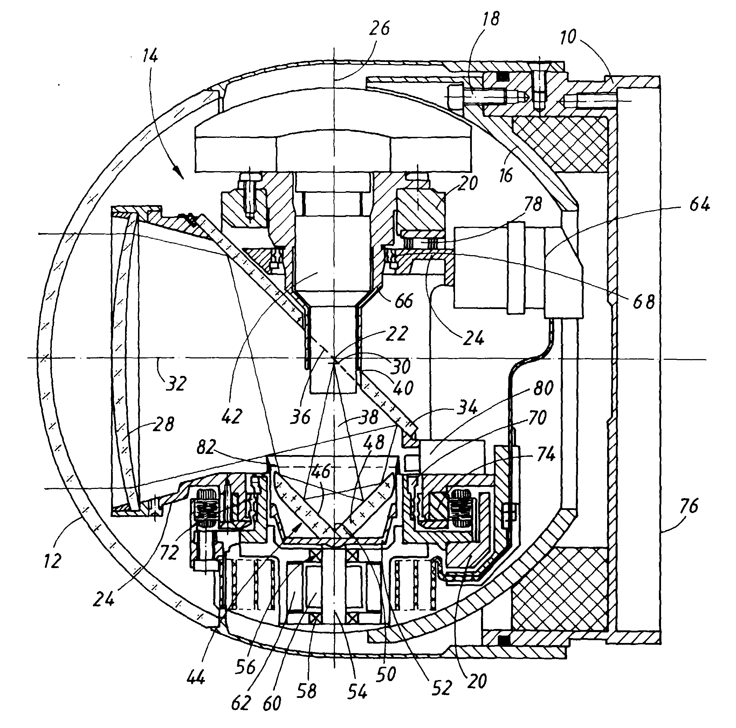

In der Figur ist mit 10 eine Struktur, speziell die Zelle eines Flugkörpers, bezeichnet, die am vorderen Ende durch einen Dom 12 abgeschlossen ist. In der Zelle 10 ist ein Sucher 14 gehaltert. Ein Suchergehäuse 16 ist durch Schrauben 18 mit der Zelle 10 verbunden. In dem Suchergehäuse 16 ist ein Außenrahmen 20 um eine Nickachse schwenkbar gelagert. Die Lagerung ist in der Zeichnung nicht zu sehen. Die Schwenkachse verläuft durch den Mittelpunkt 22 senkrecht zur Papierebene der Zeichnung. In dem Außenrahmen 20 ist ein Innenrahmen 24 um eine von der Gierachse gebildete Rahmenachse 26 gelagert. Die Rahmenachse 26 des Innenrahmens 24 verläuft durch den Mittelpunkt 22 und senkrecht zu der die Rahmenachse des Außenrahmens bildenden Nickachse.

Auf dem Innenrahmen 24 sitzt eine Linse 28 als Objektiv, das ein Gesichtsfeld in der Ebene eines Detektors 30 abbildet. Die Linse 28 besteht aus einen infrarotdurchlässigen Material. Die Linse 28 definiert eine optische Achse 32. Die optische Achse 32 ist senkrecht zu der Rahmenachse 26 und verläuft auch durch den Mittelpunkt 22. Auf dem Innenrahmen 24 ist weiterhin ein von einem Planspiegel gebildeter Umlenkspiegel 34 angeordnet. Der Umlenkspiegel 34 ist unter 45° zu der optischen Achse 32 geneigt. Die Reflexionsebene 36 des Umlenkspiegels 34 geht ebenfalls durch den Mittelpunkt 22. Das von der Linse erfaßte Lichtbündel wird durch den Umlenkspiegel 34 so um 90° umgelenkt, daß die umgelenkte optische Achse 38 mit der Rahmenachse 26 zusammenfällt.

Der Umlenkspiegel 34 weist einen zentralen Durchbruch 40 auf. Durch diesen Durchbruch 40 hindurch ragt eine Detektoranordnung 42 mit dem Detektor 30. Die Detektoranordnung 42 enthält in bekannter Weise ein Dewargefäß und einen Kühler zum Kühlen des Detektors. Der Detektor ist ein Reihendetektor, d.h. ein Detektor mit einer Reihe von getrennten Detektorelementen. Die Detektoranordnung 42 sitzt an dem Außenrahmen 20. An dem Außenrahmen sitzen auch Spiegelmittel 44. Diese Spiegelmittel 44 sind dem Detektor 30 gegenüber auf der Rahmenachse 26 angeordnet. Das von dem Umlenkspiegel 34 umgelenkte, abbildende Lichtbündel fällt auf die Spiegelmittel 44 und wird von diesen auf den Detektor 30 zurückgeworfen. Die Linse 28 erzeugt dadurch über den Umlenkspiegel 34 und die Spiegelmittel 44 ein Bild eines beobachteten Gesichtsfeldes in der Ebene des Detektors 30.

Im vorliegenden Fall ist der Detektor 30 ein Reihendetektor. Die Spiegelmittel 44 sind daher zugleich als bilddrehende Mittel ausgebildet, die angetrieben werden und eine kontinuierliche Bilddrehung des Bildes des Gesichtsfeldes um die Rahmenachse 26 bewirken. Dadurch wird das Bild des Gesichtsfeldes relativ zu dem Detektor 30 gedreht und dadurch von dem Detektor 30 wie von einem Uhrzeiger abgetastet. Zur Erzeugung der Bilddrehung sind die Spiegelmittel 44 von einem Dachkantspiegel mit zwei zueinander senkrechten Planspiegeln 46 und 48 gebildet. Die Dachkante 50 der Planspiegel 46, 48 schneidet die Rahmenachse 26 senkrecht. Die Planspiegel 46 und 48 sitzen in einer Halterung 52 mit einer längs der Rahmenachse 26 sich erstreckenden Welle 54. Die Welle 54 ist in Lagern 56 und 58 in dem Außenrahmen 20 gelagert. Auf der Welle 54 sitzt der Rotor 60 eines Antriebsmotors, dessen Stator 62 auf dem Außenrahmen 20 angeordnet ist.

Auf dem Innenrahmen 24 sitzt ein Drehgeschwindigkeitssensor 64 in Form eines Kreisels.

Die Detektoranordnung 42 sitzt in einer an dem Außenrahmen 20 vorgesehenen, hülsenförmigen Halterung 66. Der Innenrahmen 24 ist über ein Kugellager 68 auf dieser Halterung 66 gelagert. Weiterhin bildet der Außenrahmen 20 koaxial zu der Rahmenachse 26 des Innenrahmens 24 einen Kragen 70. Auf diesem Kragen 70 ist der Innenrahmen 24 ebenfalls über Kugellager 72 gelagert. Die Kugellager 72 sind von dem ringförmigen Rotor 74 eines Rahmenstellmotors umgeben. Dieser Rotor 74 sitzt am Innenrahmen 24. Der Rotor 74 des Rahmenstellmotors ist wiederum von dem Stator 76 umgeben, der am Außenrahmen angeordnet ist. Der Kragen 70 umgibt die Spiegelmittel 44 und die Halterung 52.

Ein Winkelsensor 78 erfaßt die Winkellage des Innenrahmens 24 relativ zu dem Außenrahmen 20. Ein entsprechender, nicht dargestellter, Winkelsensor erfaßt die Winkellage des Außenrahmens um die Nickachse relativ zu dem Suchergehäuse 16.

Auf dem Innenrahmen 24 sitzt eine Abtasteinrichtung 80, die Marken auf dem Rand 82 der Halterung 52 abtastet. Die Abtasteinrichtung 80 liefert dadurch die Winkellage der bilddrehenden Spiegelmittel 44 relativ zu dem Innenrahmen 24, und zwar obwohl die Halterung 52 im Außenrahmen 20 gelagert ist. Die bilddrehenden Spiegelmittel 44 mit den beiden Planspiegeln 46 und 48 bewirken eine Bilddrehung mit der doppelten Umlauffrequenz der Halterung 52. Aus der Nummer jedes Detektorelements und der Winkelinformation von der Abtasteinrichtung 80 kann jedem Detektorsignal ein bestimmter Bildpunkt zugeordnet werden. Aus der Bildabtastung werden Signale gewonnen, welche über den Rahmenstellmotor 74,76 und einen entsprechenden, um die Nickachse wirkenden zweiten Rahmenstellmotor eine Ausrichtung des Suchers 14 auf ein erfaßtes Ziel bewirken. Das ist bekannte Technik und daher hier nicht im einzelnen beschrieben.

## Patentansprüche

1. Suchkopf, insbesondere für zielsuchende Flugkörper, enthaltend ein kardanisch über einen Innen- und einen Außenrahmen ( 24 bzw. 20) gegenüber einer Struktur (10) allseitig beweglich gelagertes optisches System und einen Detektor (30), auf welchem durch das optische System ein Bild eines Gesichtsfeldes erzeugbar ist, bei welchem
(a) das abbildende optische System ein auf dem Innenrahmen (24) angeordnetes, objektseitiges optisches Glied (28) aufweist, das eine optische Achse (32) des abbildenden optischen Systems definiert,
(b) das optische System einen auf dem Innenrahmen (24) angeordneten Umlenkspiegel (34) enthält, durch welchen der Strahlengang gefaltet wird und
(c) Spiegelmittel (46,48) vorgesehen sind , welche den Strahlengang umkehren,
**dadurch gekennzeichnet, daß**
(d) der Umlenkspiegel (34) auf dem Innenrahmen (24) feststehend und objektseitig von den Spiegelmitteln (46,48) so angeordnet ist, daß die umgelenkte optische Achse (38) mit der Rahmenachse (26) des Innenrahmens (24) zusammenfällt,
(e) der Detektor (30) im Außenrahmen (20) auf der Rahmenachse (26) des Innenrahmens (24) gehaltert ist und
(f) die Spiegelmittel (46,48) ebenfalls auf der Rahmenachse des Innenrahmens (24) angeordnet sind und die von dem Umlenkspiegel (34) in die Richtung der Rahmenachse des Innenrahmens (24) umgelenkten Strahlengang umkehren und auf den Detektor (30) lenken.

2. Suchkopf nach Anspruch 1, **dadurch gekennzeichnet**, **daß** die auf der Rahmenachse (26) des Innenrahmens (24) angeordneten Spiegelmittel (44) am Außenrahmen (20) angebracht sind.

3. Suchkopf nach Anspruch 1 oder 2, **dadurch gekennzeichnet,** **daß**
(a) der Detektor (30) ein Reihendetektor ist und
(b) die Spiegelmittel (44) von bilddrehenden Mitteln gebildet sind, die um die Rahmenachse (26) des Innenrahmens (24) antreibbar sind.

4. Suchkopf nach Anspruch 3, **dadurch gekennzeichnet, daß**
(a) der Umlenkspiegel (34) im Bereich der Rahmenachse (26) des Innenrahmens (24) einen Durchbruch (40) aufweist und
(b) eine den Detektor (30) enhaltende Detektoranordnung (42) durch diesen Durchbruch (40) hindurchragt.

5. Suchkopf nach Anspruch 3 oder 4, **dadurch gekennzeichnet,** **daß** die bilddrehenden Mittel von einem Dachkantspiegel (46,48) gebildet sind, dessen Dachkante (50) die Rahmenachse (26) des Innenrahmens (24) senkrecht schneidet.

6. Suchkopf nach Anspruch 4, **dadurch gekennzeichnet, daß**
(a) die Detektoranordnung (42) in einer am Außenrahmen (20) vorgesehenen, hülsenartigen Halterung (66) gehaltert ist und
(b) der Innenrahmen (24) über ein Lager (78) auf der hülsenartigen Halterung (66) gelagert ist.

7. Suchkopf nach Anspruch 6, **dadurch gekennzeichnet, daß**
(a) die bilddrehenden Mittel von einem am Außenrahmen (20) vorgesehenen Kragen (70) umgeben sind und
(b) der Innenrahmen (24) über ein Lager (72) auf diesem Kragen (70) gelagert ist.

8. Suchkopf nach Anspruch 7, **dadurch gekennzeichnet, daß**
(a) das Lager (72) von dem am Innenrahmen (24) sitzenden, ringförmigen Rotor (74) eines Rahmenstell motors für den Innenrahmen (24) umgeben ist und
(b) der Rotor (74) von dem an dem Außenrahmen (20) sitzenden Stator (76) dieses Rahmenstellmotors umgeben ist.

9. Suchkopf nach einem der Ansprüche 4 bis 8, **dadurch gekennzeichnet, daß** an dem Außenrahmen (20) gleichachsig zur Rahmenachse (26) des Innenrahmens (24) ein Antriebsmotor (60,62) für die bilddrehenden Mittel vorgesehen ist.

10. Suchkopf nach einem der Ansprüche 4 bis 9, **dadurch gekennzeichnet, daß** an dem Innenrahmen (24) eine Abtasteinrichtung (80) angeordnet ist, welche auf die relative Winkellage der bilddrehenden Mittel (44) zu dem Innenrahmen (20) anspricht.

11. Suchkopf nach einem der Ansprüche 1 bis 10, **dadurch gekennzeichnet, daß** an dem Innenrahmen (24) ein Drehgeschwindigkeitssensor (64) angebracht ist.

12. Suchkopf nach einem der Ansprüche 1 bis 11, **dadurch** **gekennzeichnet, daß** an dem Außenrahmen (20) ein Winkelsensor (78) angebracht ist, der auf die relative Winkellage zwischen Innen- und Außenrahmen (24,20) um die Rahmenachse (26) des Innenrahmens (24) anspricht.

13. Suchkopf nach einem der Ansprüche 1 bis 12, **dadurch** **gekennzeichnet, daß** der Detektor (30) ein Infrarot-detektor ist.

14. Suchkopf nach Anspruch 13, **dadurch gekennzeichnet, daß** das abbildende optische System mit wenigstens einer Linse (28) aus infrarotdurchlässigem Material aufgebaut ist.

## Claims

1. Seeker head, particularly for target tracking missiles, with an optical system, which is universally movably suppurted with respect to a structure (10) by means of a gimbal mounting through an inner gimbal and an outer gimbal (24 and 20, respectively), and a detector (30), on which an image of the field of view can be generated by means of the optical system, wherein
(a) the imaging optical system comprises an optical element (28), which is arranged on the inner gimbal (24) on the side of the object and which defines an optical axis (32) of the imaging optical system,
(b) the imaging optical system includes a deflecting mirror (34), which is disposed on the inner gimbal (24) and which folds the path of rays, and
(c) mirror means (46,48) are provided, which reverse the path of rays,
**characterized in that**
(d) the deflecting mirror (34) is fixedly arranged on the inner gimbal (24) on the object side of the mirror means (46,48) such that the deflected optical axis (38) coincides with the gimbal axis (26) of the inner gimbal (24),
(e) the detector (30) is mounted on the outer gimbal (20) on the gimbal axis (26) of the inner gimbal (24), and
(f) the mirror means (46,48) is also arranged on the gimbal axis of the inner gimbal (24) and reverses the deflected path of rays, which is deflected by the deflecting mirror (34) in the direction of the gimbal axis of the inner gimbal (24), and directs it towards the detector.

2. Seeker head as claimed in claim 1, **characterized in that** the mirror means (44) arranged on the gimbal axis (26) of the inner gimbal (24) are attached to the outer gimbal (20).

3. Seeker head as claimed in claim 1 or 2, **characterized in that**
(a) the detector (30) is a linear array detector, and
(b) the mirror means (44) are image-rotating means, which are arranged to be driven about the gimbal axis (26) of the inner gimbal (26).

4. Seeker head as claimed in claim 3, **characterized in that**
(a) the deflecting mirror (34) has an aperture (40) in the region of the gimbal axis (26) of the inner gimbal (24), and
(b) a detector assembly (42) containing the detector (30) extends through this aperture (40).

5. Seeker head as claimed in claim 3 or 4, **characterized in that** the image-rotating means are formed by a ridge mirror (46,48) the roof edge (50) of which intersects the gimbal axis (26) of the inner gimbal (24) at a right angle.

6. Seeker head as claimed in claim 4, **characterized in that**
(a) the detector assembly (42) is mounted in a sleeve-like mount (66) provided at the outer gimbal (20), and
(b) the inner gimbal (24) is mounted on the sleeve-like mount (66) through a bearing (78).

7. Seeker head as claimed in claim 6, **characterized in that**
(a) the image-rotating means are surrounded by a collar (70) provided to the outer gimbal (20) and
(b) the inner gimbal (24) is mounted on this collar (70) through a bearing (72).

8. Seeker head as claimed in claim 7, **characterized in that**
(a) the bearing (72) is surrounded by the annular rotor (74) of a gimbal servomotor for the inner gimbal (24), the rotor being attached to the inner gimbal (24), and
(b) the rotor (74) is surrounded by the stator (76) of this gimbal servomotor, the stator being attached to the outer gimbal (20).

9. Seeker head as claimed in anyone of the claims 4 to 8, **characterized in that** a drive motor (60,62) for the image-rotating means is provided on the outer gimbal (20) coaxial with the gimbal axis (26) of the inner gimbal (24).

10. Seeker head as claimed in anyone of the claims 4 to 9, **characterized in that** a pick-up device (80) is arranged on the inner gimbal (24), the pick-up device responding to the relative angular position of the image-rotating means (44) with respect to the inner gimbal (24).

11. Seeker head as claimed in anyone of the claims 1 to 10, **characterized in that** a rotary speed sensor (64) is attached to the inner gimbal (24).

12. Seeker head as claimed in anyone of the claims 1 to 11, **characterized in that** an angle sensor (78) is attached to the outer gimbal (20) and responds to the relative angular positions between the inner and outer gimbals (24,20) about the gimbal axis (26) of the inner gimbal (24).

13. Seeker head as claimed in anyone of the claims 1 to 12, **characterized in that** the detector (30) is an infrared detector.

14. Seeker head as claimed in claim 13, **characterized in that** the imaging optical system is designed with at least one lens (28) of infrared-transparent material.

## Revendications

1. Tête chercheuse, en particulier pour des missiles autodirecteurs, comprenant un système optique monté sur cardan de façon mobile de tous les côtés par rapport à une structure (10) par l'intermédiaire d'un cadre intérieur et d'un cadre extérieur (24 et 20 respectivement), et un détecteur (30) sur lequel une image d'un champ de vision est susceptible d'être produite par le système optique, tête pour laquelle
(a) le système optique reproducteur présente un membre optique (28) du côté de l'objet disposé sur le cadre intérieur (24) et définissant un axe optique (32) du système optique reproducteur,
(b) le système optique contient un miroir de déviation (34) disposé sur le cadre intérieur (24) par lequel la marche des rayons est pliée et
(c) des moyens à miroir (46,48) renversant la marche des rayons sont prévus,
**caractérisée par le fait que**
(d) le miroir de déviation (34) est disposé de façon fixe sur le cadre intérieur (24) et du côté de l'objet des moyens à miroir (46,48) si bien que l'axe optique (38) dévié coïncide avec l'axe de cadre (26) du cadre intérieur (24),
(e) le détecteur (30) est fixé dans le cadre extérieur (20) sur l'axe de cadre (26) du cadre intérieur (24) et
(f) les moyens à miroir (46,48) sont également disposés sur l'axe de cadre du cadre intérieur (24) et renversent et conduisent sur le détecteur (30) la marche des rayons déviée par le miroir de déviation (34) en direction de l'axe de cadre du cadre intérieur (24).

2. Chercheur selon la revendication 1, **caractérisé par le fait que** les moyens à miroir (44) disposés sur l'axe de cadre (26) du cadre intérieur (24) sont installés au cadre extérieur (20).

3. Chercheur selon la revendication 1 ou 2, **caractérisé par le fait que**
(a) le détecteur (30) est un détecteur en série et
(b) les moyens à miroir (44) sont formés de moyens tournant des images qui sont actionnés autour de l'axe de cadre (26) du cadre intérieur (24).

4. Chercheur selon la revendication 3, **caractérisé par le fait que**
(a) le miroir de déviation (34) présente dans le domaine de l'axe de cadre (26) du cadre intérieur (24) un percement (40) et
(b) une disposition de détecteur (42) comprenant le détecteur (30) émerge à travers ce percement (40).

5. Chercheur selon la revendication 3 ou 4, **caractérisé par le fait que** les moyens tournant les images sont formés d'un miroir à section triangulaire (46,48) dont le bord (50) coupe verticalement l'axe de cadre (26) du cadre intérieur (24).

6. Chercheur selon la revendication 4, **caractérisé par le fait que**
(a) la disposition de détecteur (42) est fixée dans une fixation (66) en forme de manchon prévue au cadre extérieur (20) et
(b) le cadre intérieur (24) est logé par l'intermédiaire d'un palier (78) sur la fixation (66) en forme de manchon.

7. Chercheur selon la revendication 6, **caractérisé par le fait que**
(a) les moyens tournant les images sont entourés d'un col (70) prévu au cadre extérieur (20) et
(b) le cadre intérieur (24) est logé par l'intermédiaire d'un palier (72) sur ce col (70).

8. Chercheur selon la revendication 7, **caractérisé par le fait que**
(a) le palier (72) est entouré du rotor (74) d'un moteur de commande de cadre pour le cadre intérieur (24), rotor en forme d'anneau se trouvant au cadre intérieur (24) et
(b) le rotor (74) est entouré du stator (76) de ce moteur de commande de cadre, stator se trouvant au cadre extérieur (20).

9. Chercheur selon l'une des revendications 4 à 8, **caractérisé par le fait qu'**un moteur d'actionnement (60,62) pour les moyens tournant les images est prévu au cadre extérieur (20) équiaxialement par rapport à l'axe de cadre (26) du cadre intérieur (24).

10. Chercheur selon l'une des revendications 4 à 9, **caractérisé par le fait qu'**un dispositif de balayage (80) est disposé au cadre intérieur (24), dispositif répondant à la position relative d'angle des moyens tournant les images (44) par rapport au cadre intérieur (20).

11. Chercheur selon l'une des revendications 1 à 10, **caractérisé par le fait qu'**un capteur de vitesse de rotation (64) est installé au cadre intérieur (24).

12. Chercheur selon l'une des revendications 1 à 11, **caractérisé par le fait qu'**un capteur d'angle (78) est installé au cadre extérieur (20), capteur répondant à la position relative d'angle entre le cadre intérieur et le cadre extérieur (24,20) autour de l'axe de cadre (26) du cadre intérieur (24).

13. Chercheur selon l'une des revendications 1 à 12, **caractérisé par le fait que** le détecteur (30) est un détecteur infrarouge.

14. Chercheur selon la revendication 13, **caractérisé par le fait que** le système optique reproducteur est constitué d'au moins une lentille (28) composée d'une matière perméable à l'infrarouge.
